# EUROPÄISCHE PATENTSCHRIFT

(11) **EP 4 077 022 B1**
(45) Veröffentlichungstag und Bekanntmachung des Hinweises auf die Patenterteilung: **07.10.2026**
(21) Anmeldenummer: 20821122.7
(22) Anmeldetag: 02.12.2020
(51) Int. Cl.: B60L 5/00, B60L 15/28, B60L 53/30, H02J 7/34

(54) **VERFAHREN ZUM BETREIBEN EINES ELEKTRISCHEN FAHRZEUGES UND ELEKTRISCHES FAHRZEUG**
METHOD FOR OPERATING AN ELECTRIC VEHICLE AND AN ELECTRIC VEHICLE
PROCÉDÉ DE FONCTIONNEMENT D'UN VÉHICULE ÉLECTRIQUE, ET VÉHICULE ÉLECTRIQUE

(30) Priorität: 18.12.2019 DE 102019008789
(43) Veröffentlichungstag der Anmeldung: 26.10.2022
(73) Patentinhaber: SEW-EURODRIVE GmbH & Co. KG, 76646 Bruchsal (DE)
(72) Erfinder: SCHÄFER, Jens, 76676 Graben-Neudorf (DE); BECKER, Jan, 76297 Stutensee (DE); BOCKELMANN, Gero, 76646 Bruchsal (DE); HAUCK, Matthias, 68723 Schwetzingen (DE); SCHUMANN, Christian, 67655 Kaiserslautern (DE); SCHMIDT, Josef, 76676 Graben-Neudorf (DE)
(86) Internationale Anmeldenummer: PCT/EP2020/025557
(87) Internationale Veröffentlichungsnummer: WO 2021/121654

(56) Entgegenhaltungen:
- EP-B1- 2 419 364
- DE-A1- 102009 014 386
- DE-A1- 102015 004 701

## Beschreibung

Die Erfindung betrifft ein Verfahren zum Betreiben eines elektrischen Fahrzeuges und ein elektrisches Fahrzeug.

Als elektrisches Fahrzeug wird vorzugsweise ein fahrerloses, mobiles Assistenzsystem vorgesehen. Alternativ ist ein solches Fahrzeug auch als fahrerloses Transportfahrzeug (FTF) oder AGV (von englisch automated guided vehicle) bezeichenbar.

Aus der DE 10 2007 002 242 A1 ist ein fahrerloses Transportfahrzeug zum Transport von Lasten bekannt. Ein solcher Lasttransport ist als intralogistische Anwendung bezeichenbar. Das fahrerlose Transportfahrzeug wird induktiv mit Energie versorgt.

Aus der DE 195 45 544 A1 ist ein Flurförderbahnsystem bekannt, wobei die Fahrzeuge über Schleifleitungen mit elektrischer Energie versorgt werden. Um das Fahrzeug auch bei ausbleibender externer Energieversorgung betreiben zu können, wird vorgeschlagen, Elektrolyt- oder Goldcaps-Kondensatorspeicher, auch bekannt als Ultrakondensatoren, Superkondensatoren oder Doppelschichtkondensatoren, als elektrische Energiequelle zu verwenden.

Aus der US 6 265 851 B1 ist eine Ultrakondensatorstromversorgung für ein elektrisches Fahrzeug bekannt. Dieses elektrische Fahrzeug verfügt über zwei Energiespeichereinrichtungen, welche wahlweise für den Antrieb des Fahrzeuges verwendet werden können.

Aus der EP 2 419 364 A1 ist ein fahrerloses Transportsystem bekannt, welches zwei Energiespeichereinrichtungen - eine Doppelschichtkondensatoreinrichtung und eine Batterieeinrichtung - aufweist. Im Normalbetrieb versorgt die Doppelschichtkondensatoreinrichtung die Antriebseinrichtung, also den Motor, mit Energie. Im Notfall, also wenn die Spannung in der Doppelschichtkondensatoreinrichtung unter ein bestimmtes Niveau fällt, wird auf Batteriebetrieb umgeschaltet. Die Antriebseinrichtung wird dann ausschließlich von der Batterieeinrichtung mit Energie versorgt bis die Doppelschichtkondensatoreinrichtung an einer Ladestation wieder aufgeladen wird.

Aus der DE 10 2017 005 153 A1 ist ein Verfahren zum Betreiben eines elektrischen Fahrzeugs und ein elektrisches Fahrzeug bekannt, wobei dieses Fahrzeugzeug über eine Hybridspeichereinrichtung und eine Doppelschichtkondensatoreinrichtung verfügt. Beide Speichereinrichtungen können wahlweise die Fahrantriebseinrichtung mit Energie versorgen.

Aus der US 5 793 189 ist eine Vorrichtung zur Verhinderung von Überentladung von in Elektrofahrzeugen verwendeten Batterien bekannt.

Der Erfindung liegt die Aufgabe zugrunde, das Energiemanagement eines elektrischen Fahrzeugs, insbesondere eines fahrerlosen mobilen Assistenzsystems mit zwei unterschiedlichen Arten von Energiespeichern, derart weiterzubilden und zu vereinfachen, dass die Energiespeichereinrichtungen gezielt an unterschiedliche Verbraucheranforderungen angepasst werden können und ein Umladen zwischen den Energiespeichereinrichtungen vermieden wird.

Erfindungsgemäß wird die Aufgabe bei dem Verfahren zum Betreiben eines elektrischen Fahrzeugs nach den in Anspruch 1 angegebenen Merkmalen und bei dem elektrischen Fahrzeug nach den in Anspruch 15 angegebenen Merkmalen gelöst.

Wichtige Merkmale der Erfindung bei dem Verfahren zum Betreiben eines elektrischen Fahrzeuges, insbesondere eines fahrerlosen, mobilen Assistenzsystems (MAS) einer intralogistischen Anwendung, sind, dass das Fahrzeug eine elektrische Fahrantriebseinrichtung für die Fahrbewegung, insbesondere Traktion, des Fahrzeugs, eine Steuereinrichtung zur Steuerung der Fahrbewegung des Fahrzeugs, eine erste Energiespeichereinrichtung, welche insbesondere als wieder aufladbare Batteriespeichereinrichtung ausgebildet ist, zur Versorgung der Steuereinrichtung mit einer ersten Gleichspannung, eine zweite Energiespeichereinrichtung, welche insbesondere als Doppelschichtkondensatoreinrichtung ausgebildet ist und/oder welche insbesondere schneller auf- und entladbar ist als die erste Energiespeichereinrichtung, zur Versorgung der Fahrantriebseinrichtung mit einer zweiten Gleichspannung, welche insbesondere größer als die erste Gleichspannung ist, und eine Energieversorgungseinheit, welche, insbesondere zeitabschnittsweise, eine Ausgangsgleichspannung bereitstellt, aufweist, wobei die erste Energiespeichereinrichtung über eine Wandlervorrichtung mit der Energieversorgungseinheit verbunden ist, wobei die zweite Energiespeichereinrichtung mit der Energieversorgungseinheit verbunden ist, wobei die Wandlervorrichtung die Ausgangsgleichspannung in die erste Gleichspannung umwandelt, insbesondere wobei die erste Gleichspannung kleiner als die Ausgangsgleichspannung ist, wobei ein erster Leistungsfluss von der ersten Energiespeichereinrichtung zur zweiten Energiespeichereinrichtung verhindert wird und dass ein zweiter Leistungsfluss von der zweiten Energiespeichereinrichtung zur ersten Energiespeichereinrichtung verhindert wird.

Von Vorteil ist dabei, dass die Nutzung der beiden Energiespeichereinrichtungen getrennt ist. Die zweite Energiespeichereinrichtung stellt benötigte Antriebsenergie zur Verfügung und die erste Energiespeichereinrichtung stellt Energie für die Steuereinrichtung zur Verfügung. Die zweite Energiespeichereinrichtung wird bei Fahrten meist fast vollständig genutzt und in Pausen des Logistikprozesses wieder aufgeladen. Die Kapazität der zweiten Energiespeichereinrichtung ist an die Erfordernisse des Logistikprozesses anpassbar und hängt im Wesentlichen von der Fahrtstrecke ohne externe Energieversorgung, also wenn die Energieversorgungseinheit keine Leistung zur Verfügung stellt, ab. Bei bekannten Fahrstrecken kann daher die Kapazität der zweiten Energiespeichereinrichtung entsprechend gewählt und optimal an die Anforderungen angepasst werden. Die erste Energiespeichereinrichtung wird zwar ebenfalls in den logistischen Pausen nachgeladen, er ist aber so ausgelegt, dass seine Energie für längere Zeiten die Steuerelektronik versorgen kann. Seine Kapazität ist somit an die Erfordernisse des Logistikprozesses anpassbar und hängt nicht nur von der Fahrdauer ohne externe Energieversorgung ab, sondern wird wesentlich dadurch bestimmt, welche unvorhergesehenen Störungen im Logistik Prozess auftreten und zu Standzeiten des Fahrzeugs führen. Störungen können zum Beispiel unerwartete Hindernisse oder Personen auf der Fahrstrecke sein, aber auch Verzögerungen bei der Kopplung an andere Prozesse, die noch nicht bereit sind. Die Entkopplung der Energiespeichereinrichtungen ermöglicht also die gezielte Speicherauslegung für die entsprechenden Verbraucher. So muss beispielsweise die zweite Energiespeichereinrichtung für eine Applikation mit langen Standzeiten des Mobilen Assistenzsystems lediglich für die Fahrt(-strecke) ausgelegt werden. Die Versorgung der Steuerelektronik, insbesondere während des gesamten Prozesses, wird von der ersten Energiespeichereinrichtung übernommen, die vorteilhaft für die längste erwartete Zeit bis zum nächsten Aufladen ausgelegt ist.

Vorteilhaft weist die erste Energiespeichereinrichtung eine höhere Energiedichte auf und hat deshalb in der Praxis eine geringere Leistungsdichte und eine geringere Zahl an möglichen Lade-/Entladezyklen im Vergleich zur zweiten Energiespeichereinrichtung. Die zweite Energiespeichereinrichtung ist vorteilhafterweise schneller auf- und entladbar als die erste Energiespeichereinrichtung.

Die erste Energiespeichereinrichtung ist vorteilhaft als Batteriespeichereinrichtung ausgebildet. Ein Beispiel für eine Batteriespeichereinrichtung ist eine Anordnung aus einem oder mehreren sekundären elektrochemischen Elementen, insbesondere auf Nickel und/oder Eisen-Basis. Ein solches sekundäres elektrochemisches Element umfasst eine negative Elektrode, eine positive Elektrode, einen porösen Separator, der die negative und die positive Elektrode voneinander trennt sowie einen, insbesondere wässrigen alkalischen, Elektrolyten, mit dem die Elektroden und der Separator getränkt sind. Ein solches sekundäres elektrochemisches Element auf Nickel und/oder Eisen-Basis ist wie ein Kondensator in der Lage, sehr schnell hohe Pulsströme zu liefern, es zeigt aber ansonsten eher ein Batterieverhalten, insbesondere gelten die Kondensator-Gleichungen Q = C U und W = ½ C U² für diese Batteriespeichereinrichtung nicht. Eine solche Batteriespeichereinrichtung weist eine höhere Zyklenfestigkeit auf. Diese Zyklenfestigkeit liegt im Bereich zwischen 1000 und 20000. Lade- und Entladezyklen sind also häufiger durchführbar, bevor die Leistungskriterien der Batteriespeichereinrichtung nicht mehr erfüllt werden. Darüber hinaus weist die Batteriespeichereinrichtung eine Überladestabilität und eine Tiefentladestabilität auf. Sie ist mit bis zu 15 C schnellladefähig. Die Batteriespeichereinrichtung ist dennoch langsamer auf- und entladbar als eine Doppelschichtkondensatoreinrichtung, welche eine vorteilhafte Ausführung für die zweite Energiespeichereinrichtung ist. Die Doppelschichtkondensatoreinrichtung zeichnet sich dadurch aus, dass sie in wenigen Sekunden aufladbar ist und vollständig entladbar bis Spannung gleich Null. Ihre Zyklenfestigkeit liegt im Bereich 1 Million.

Bei einer vorteilhaften Ausgestaltung wird der erste Leistungsfluss jederzeit, also zu jedem Zeitpunkt, verhindert und der zweite Leistungsfluss jederzeit, also zu jedem Zeitpunkt, verhindert. Diese Formulierung ist so zu verstehen, dass das Verfahren so durchgeführt wird, dass ein Ladungs- beziehungsweise Energietransfer zwischen den beiden Energiespeichereinrichtungen nicht nur zeitabschnittsweise sondern permanent, also jederzeit, verhindert wird. Es ist also zu keinem Zeitpunkt möglich, Ladung beziehungsweise Energie, die einmal in einer Energiespeichereinrichtung gespeichert war, zur Aufladung der anderen Energiespeichereinrichung zu verwenden. Von Vorteil ist dabei, dass die Nutzung der beiden Energiespeichereinrichtungen jederzeit vollständig getrennt ist. Die zweite Energiespeichereinrichtung stellt jederzeit ausschließlich die benötigte Antriebsenergie zur Verfügung und die erste Energiespeichereinrichtung stellt jederzeit nur die Energie für die Steuereinrichtung zur Verfügung. Wie weiter unten offenbart wird, kann zumindest die Verhinderung des zweiten Leistungsflusses mittels baulichen Komponenten, beispielsweise einer Diode, oder mittels regelungstechnischen Maßnahmen realisiert werden.

Bei einer vorteilhaften Ausgestaltung weist ein Ausgangsstrom der Energieversorgungseinheit einen zeitlich im Wesentlichen konstanten Wert auf, insbesondere wobei der Ausgangsstrom auf diesen konstanten Wert geregelt wird. Es ist daher möglich, dass die zweite Energiespeichereinrichtung mit konstantem Strom geladen wird bis eine festgelegte maximale Spannung erreicht wird, insbesondere wobei die Energieversorgungseinheit anschließend, also wenn an der zweiten Energiespeichereinrichtung die maximale Spannung herrscht, deaktiviert wird. Von Vorteil ist dabei, dass die Steuerung der Energieversorgungseinheit sehr einfach erfolgen kann. Es ist insbesondere eine Regelung des Ausgangsstroms auf einen konstanten Wert ausführbar.

Bei einer vorteilhaften Ausgestaltung wird der Energieversorgungseinheit kontaktbehaftet oder berührungslos Energie zugeführt.

Von Vorteil bei der kontaktbehafteten Energiezufuhr ist dabei, dass eine einfache Aufladung der Energiespeicher, beispielsweise mittels Stecker, ermöglicht ist.

Von Vorteil bei der berührungslosen Energiezufuhr ist dabei, dass eine sichere Aufladung der Energiespeicher, beispielsweise mittels Induktion, ermöglicht ist. Bei einer vorteilhaften Ausgestaltung umfasst die Energieversorgungseinheit einen Gleichrichter, der aus einer Sekundärinduktivität des elektrischen Fahrzeugs gespeist wird, insbesondere welcher eine Kapazität derart in Reihe oder parallel zugeschaltet ist, dass die Resonanzfrequenz des so gebildeten Schwingkreises der Frequenz eines in eine stationär angeordnete Primärinduktivität eingeprägten Wechselstromes gleicht. Durch die induktive Energieübertragung ist auch die Sicherheit erhöht und es kommt nicht zu einem Verschleiß von ansonsten erforderlichen Ladekontakten. Zudem ist eine berührsichere Ausführung einfach realisierbar.

Bei einer vorteilhaften Ausgestaltung wird der Energieversorgungseinheit zeitabschnittsweise während der Fahrt Energie zugeführt.

Von Vorteil ist dabei, dass auf Teilbereichen der Fahrstrecke die Energieversorgung ausführbar ist und dadurch die beiden Energiespeichereinrichtungen entweder wieder aufladbar sind oder ihr Ladezustand vollgeladen gehalten wird und somit ihre Standzeit verlängerbar ist, da sie möglichst wenig vollen Ladezyklen ausgesetzt werden, insbesondere also nicht häufig vollständig auf- und entladen werden. Die Alterung ist somit dadurch verringert. Die Energieversorgung ist beispielsweise mittels Schleifleitungen kontaktbehaftet ausführbar. Alternativ ist ein stationär angeordneter Primärleiter entlang der Fahrstrecke angeordnet, über welchen Energie induktiv an eine im elektrischen Fahrzeug angeordnete Sekundärinduktivität übertragen wird.

Bei einer vorteilhaften Ausgestaltung wird der erste Leistungsfluss dadurch verhindert, dass die Wandlervorrichtung als unidirektionaler, insbesondere potentialgetrennter, DC/DC-Wandler ausgebildet ist.

Von Vorteil ist dabei, dass auf einfache Weise der erste Leistungsfluss verhindert wird bei gleichzeitiger Spannungswandlung. Von Vorteil bei dem potentialgetrennten DC/DC-Wandler ist, dass die beiden Spannungsebenen U₀ und U₂ galvanisch getrennt sind und sich somit eine elektrisch sichere Trennung von Antriebsversorgung und Elektronikversorgung ermöglichen lässt. Da nur eine Leistungsflussrichtung vorgesehen ist, lässt sich auch trotz Potentialtrennung eine einfache und kostengünstige elektronische Schaltung einsetzen. Dies wäre bei einer bidirektionalen Schaltung nicht möglich.

Bei einer vorteilhaften Ausgestaltung wird der zweite Leistungsfluss durch eine zwischen der zweiten Energiespeichereinrichtung und der Wandlervorrichtung angeordnete Diode verhindert. Von Vorteil ist dabei, dass die Verhinderung des zweiten Leistungsflusses einfach realisiert ist.

Bei einer vorteilhaften Ausgestaltung ist die zweite Energiespeichereinrichtung direkt mit der Energieversorgungseinheit und/oder direkt mit der Wandlervorrichtung verbunden, wobei der zweite Leistungsfluss dadurch verhindert wird, dass die zweite Gleichspannung mittels einer Gradienten-Auswertung überwacht wird, wobei bei einem positiven Gradienten auf Spannungsebene der zweiten Gleichspannung die Wandlervorrichtung aktiviert wird, insbesondere wenn die zweite Gleichspannung größer als ein Minimalspannungswert ist, und bei einem nicht positiven Gradienten auf Spannungsebene der zweiten Gleichspannung die Wandlervorrichtung deaktiviert wird.

Von Vorteil ist dabei, dass zwischen der Energieversorgungseinheit und der zweiten Energiespeichereinrichtung und/oder zwischen der Wandlervorrichtung und der zweiten Energiespeichereinrichtung keine zusätzlichen leistungsflusssteuernden oder leitstungsflussverhindernden elektronischen Schaltungen oder sonstige Bauteile, wie beispielsweise Dioden oder Schalter, notwendig sind, um ein Umladen zwischen den Energiespeichern zu verhindern. Dies ist mit der Formulierung "direkt verbunden" gemeint. "Direkt verbunden" schließt also nicht aus, dass zwischen zweiter Energiespeichereinrichtung und Energieversorgungseinheit beziehungsweise Wandlervorrichtung beispielsweise Widerstände oder Induktivitäten angeordnet sind. Die Verhinderung der Leistungsflüsse wird ausschließlich durch die Wandlervorrichtung vorgenommen und kann dort einfach gesteuert werden. Ein positiver Spannungsgradient bedeutet dabei, dass die zweite Gleichspannung ansteigt. Der Anstieg der Spannung kann einerseits dadurch erfolgen, dass die externe Energieversorgungseinheit Energie einspeist. Andererseits kann auch durch generatorisch betriebene Elektromotoren der Fahrantriebseinrichtung Energie rückgespeist werden. Bei dieser Ausführungsform ist es also möglich, dass die erste Energiespeichereinrichtung durch generatorisch betriebene Antriebsmotoren, beispielsweise bei einem Bremsvorgang des Fahrzeugs, aufgeladen wird. Es ist jedoch sichergestellt, dass diese Aufladung nicht unter Nutzung von in der zweiten Energiespeichereinrichtung gespeicherter Energie erfolgt. Ein nicht positiver Gradient auf Spannungsebene der zweiten Gleichspannung bedeutet, dass die zweite Gleichspannung fällt und somit der zweiten Energiespeichereinrichtung Energie entnommen wird. Dadurch, dass in diesem Fall die Wandlervorrichtung deaktiviert wird, wird sichergestellt, dass die Energie der zweiten Energiespeichereinrichtung ausschließlich zur Versorgung der Fahrantriebseinrichtung verwendet wird und insbesondere nicht dazu verwendet wird, die erste Energiespeichereinrichtung aufzuladen.

Alternativ ist es auch möglich, dass die genannte Gradienten-Auswertung verwendet wird, obwohl die zweite Energiespeichereinrichtung nicht direkt, also indirekt, beispielsweise über eine Diode, mit der Energieversorgungseinheit oder indirekt mit der Wandlervorrichtung verbunden ist. Die Merkmale "direkte Verbindung" und "Gradienten-Auswertung" sind also nicht untrennbar miteinander verknüpft. Die Gradienten-Auswertung ermöglicht lediglich vorteilhaft die Realisierung einer direkten Verbindung.

Bei einer vorteilhaften Ausgestaltung wird die erste Gleichspannung zum Laden der ersten Energiespeichereinrichtung, insbesondere mittels der Steuereinrichtung, variiert.

Von Vorteil ist dabei, dass die erste Energiespeichereinrichtung mit einem genau einstellbaren Strom geladen werden kann, zum Beispiel entsprechend einer Ladekennlinie.

Bei einer vorteilhaften Ausgestaltung ist die zweite Energiespeichereinrichtung derart ausgelegt, dass mehr Strom aufnehmbar ist als durch die Energieversorgungseinheit bereitstellbar ist.

Von Vorteil ist dabei, dass die Energieversorgungseinheit sehr einfach vor Überlastung geschützt werden kann. Hierzu wird lediglich eine Spannungsbegrenzung benötigt, welche bei Erreichen der maximal zulässigen Betriebsspannung der zweiten Energiespeichereinrichtung die Energieversorgungseinheit deaktiviert.

Wichtige Merkmale bei der erfindungsgemäßen Vorrichtung zur Versorgung eines ersten Verbrauchers eines elektrischen Fahrzeuges, insbesondere eines fahrerlosen, mobilen

Assistenzsystems einer intralogistischen Anwendung, mit einer ersten Gleichspannung und zur Versorgung eines zweiten Verbrauchers mit einer zweiten Gleichspannung sind, dass die Vorrichtung eine erste Energiespeichereinrichtung, welche insbesondere als wieder aufladbare Batteriespeichereinrichtung ausgebildet ist, eine zweite Energiespeichereinrichtung, welche insbesondere als Doppelschichtkondensatoreinrichtung ausgebildet ist und/oder welche insbesondere schneller auf- und entladbar ist als die erste Energiespeichereinrichtung, und eine Energieversorgungseinheit, welcher, insbesondere zeitabschnittsweise, eine Ausgangsgleichspannung entnehmbar ist, aufweist, wobei der ersten Energiespeichereinrichtung die erste Gleichspannung entnehmbar ist, wobei der zweiten Energiespeichereinrichtung die zweite Gleichspannung entnehmbar ist, welche insbesondere größer als die erste Gleichspannung ist, wobei die erste Energiespeichereinrichtung über eine Wandlervorrichtung mit der Energieversorgungseinheit verbunden ist, wobei die zweite Energiespeichereinrichtung mit der Energieversorgungseinheit verbunden ist, wobei die Wandlervorrichtung die Ausgangsgleichspannung in die erste Gleichspannung umwandelt, insbesondere wobei die erste Gleichspannung kleiner als die Ausgangsgleichspannung ist, wobei die Vorrichtung derart ausgestaltet ist, dass ein erster Leistungsfluss von der ersten Energiespeichereinrichtung zur zweiten Energiespeichereinrichtung verhindert wird und dass ein zweiter Leistungsfluss von der zweiten Energiespeichereinrichtung zur ersten Energiespeichereinrichtung verhindert wird.

Von Vorteil ist dabei, dass eine Entkopplung der Energiespeichereinrichtungen ermöglicht ist und somit eine gezielte Speicherauslegung für die entsprechenden Verbraucher ermöglicht ist.

Bei einer vorteilhaften Ausgestaltung ist die Energieversorgungseinheit als regelbare Stromquelle ausgebildet.

Von Vorteil ist dabei, dass dies insbesondere für eine induktiv gekoppelte Energieversorgungseinheit sehr einfach zu realisieren ist.

Bei einer vorteilhaften Ausgestaltung ist die erste Energiespeichereinrichtung derart trennbar am elektrischen Fahrzeug angeordnet, dass ein Austausch der ersten Energiespeichereinrichtung ermöglicht ist.

Von Vorteil ist dabei, dass bei Verschleiß der ersten Energiespeichereinrichtung diese einfach austauschbar ist. Die erste Energiespeichereinrichtung ist also nicht fest im Fahrzeug montiert oder integriert, sondern lösbar am Fahrzeug angebaut. Insbesondere bei einer Verwendung von Kleinspannung für die erste Gleichspannung ergibt sich der Vorteil, dass die erste Energiespeichereinrichtung auch von einer nicht entsprechend ausgebildeten Person einfach ausgetauscht werden kann. Dies ist insbesondere dann vorteilhaft, wenn die erste Energiespeichereinrichtung nicht auf die Lebensdauer des Fahrzeuges ausgelegt wird und daher ein Verschleißteil ist.

Bei einer vorteilhaften Ausgestaltung ist an der ersten Energiespeichereinrichtung mittels einer Strommessung und/oder Spannungsmessung ein Überspannungsschutz und/oder Unterspannungsschutz und/oder Überstromschutz bereitgestellt und/oder an der ersten Energiespeichereinrichtung mittels einer Temperaturmessung ein Übertemperaturschutz bereitgestellt und/oder an der zweiten Energiespeichereinrichtung mittels einer Strommessung und/oder Spannungsmessung ein Überspannungsschutz und/oder Überstromschutz bereitgestellt und /oder an der zweiten Energiespeichereinrichtung mittels einer Temperaturmessung ein Übertemperaturschutz bereitgestellt.

Von Vorteil ist dabei, dass die Sicherheit der Energiespeichereinrichtungen erhöht ist und diese nicht zerstört werden. Dies ist insbesondere für den Fall wichtig, wenn durch einen Verbraucher Energie in eine Energiespeichereinrichtung zurückgespeist wird.

Bei einer vorteilhaften Ausgestaltung weist das elektrische Fahrzeug die erfindungsgemäße Vorrichtung zur Versorgung eines ersten und zweiten Verbrauchers des elektrischen Fahrzeugs auf, wobei der erste Verbraucher eine Steuereinrichtung zur Steuerung der Fahrbewegung des Fahrzeugs und/oder der zweite Verbraucher ist eine elektrische Fahrantriebseinrichtung für die Fahrbewegung, insbesondere Traktion, des Fahrzeugs oder eine Hubeinrichtung oder eine Handlingseinrichtung.

Von Vorteil ist dabei, dass Steuereinrichtung auf der einen Seite und gesteuerte Verbraucher auf der anderen Seite jeweils eine eigene Energieversorgung besitzen.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

In der Figur 1 ist eine erfindungsgemäße Vorrichtung zur Spannungsversorgung zweier Verbraucher eines mobilen Assistenzsystems schematisch gezeigt. Das mobile Assistenzsystem wird im Folgenden auch als MAS bezeichnet.

In der Figur 2 ist ein erfindungsgemäßes mobiles Assistenzsystem mit zwei Verbrauchern schematisch gezeigt.

In der Figur 3 ist ein weiteres Ausführungsbeispiel eines erfindungsgemäßen mobilen Assistenzsystems mit zwei Verbrauchern schematisch gezeigt.

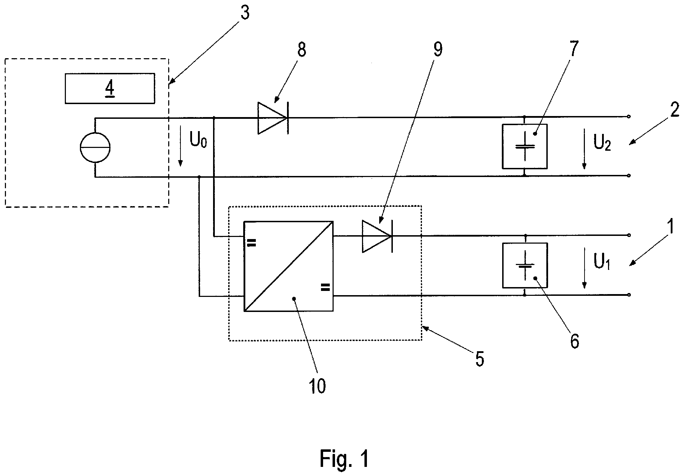

Figur 1 zeigt eine Vorrichtung zur Spannungsversorgung zweier Verbraucher mit den Gleichspannungen U₁ und U₂. Die Vorrichtung weist hierfür einen ersten Gleichspannungsanschluss 1 und einen zweiten Gleichspannungsanschluss 2 auf, an welchen wie gezeigt die Gleichspannungen U₁ und U₂ anliegen. Die Vorrichtung weist zur Energieversorgung eine Energieversorgungseinheit 3 auf, welche in diesem Ausführungsbeispiel als regelbare Stromquelle ausgebildet ist. Hierzu weist die Energieversorgungseinheit 3 einen Regler 4 auf, welcher den Ausgangsstrom der Energieversorgungseinheit 3 regelt und damit die Ausgangsgleichspannung U₀ steuert. Die Energieversorgungseinheit 3 ist ohne Spannungswandler mit dem zweiten Gleichspannungsanschluss 2 verbunden. Im Ausführungsbeispiel der Figur 1 ist zwischen der Energieversorgungseinheit 3 und dem zweiten Gleichspannungsanschluss 2 eine Diode 8 angeordnet, welche einen Leistungsfluss in Richtung des zweiten Gleichspannungsanschlusses zulässt, sofern die Ausgangsgleichspannung U₀ größer als die Durchlassspannung der Diode 8 ist, und welche entsprechend einen Leistungsfluss in Richtung der Energieversorgungseinheit, insbesondere permanent, verhindert, falls die zweite Gleichspannung U₂ größer sein sollte als die Ausgangsgleichspannung U₀. Dies wäre zum Beispiel dann der Fall, wenn am zweiten Gleichspannungsanschluss 2 Energie eingespeist wird, zum Beispiel durch einen generatorisch betriebenen Elektromotor. Eine andere Situation, in welcher die Diode sperrt, ist der Fall, wenn der Energieversorgungseinheit 3 keine externe Energie zugeführt wird (U₀ = 0) und am zweiten Gleichspannungsanschluss eine Spannung U₂ größer Null anliegt.

Die erste Gleichspannung U₁ am ersten Gleichspannungsanschluss unterscheidet sich von der zweiten Gleichspannung U₂. Für die Anwendung der Vorrichtung in einem MAS sind Gleichspannungen U₂ im Bereich von Niederspannungen, vorteilhaft im Bereich zwischen 120V und 600V, insbesondere 300V, und Gleichspannungen U₁ im Bereich von Kleinspannungen, vorteilhaft 12V, 24V oder 48V, üblich.

Um die Gleichspannung U₂ in die niedrigere Gleichspannung U₁ zu wandeln, ist zwischen der Energieversorgungseinheit 3 und dem ersten Gleichspannungsanschluss 1 eine Wandlervorrichtung 5 vorhanden. Die Wandlervorrichtung 5 ist dabei parallel zum zweiten Gleichspannungsanschluss 2 angeschlossen, so dass der Wandlervorrichtung 5 ebenfalls die Ausgangsgleichspannung U₀ als Eingangsspannung dient.

Zur Pufferung und Energiespeicherung weist die Vorrichtung zwei Energiespeicher 6, 7 auf. Der erste Energiespeicher 6 ist in diesem Ausführungsbeispiel als Batteriespeicher ausgebildet und beispielsweise als sekundäres elektrochemisches Element ausgeführt ist. Ebenso ist ein wiederaufladbarer Akku als erster Energiespeicher 6 denkbar. Der zweite Energiespeicher 7 ist in diesem Ausführungsbeispiel als Doppelschichtkondensator ausgeführt. In dem gezeigten Ausführungsbeispiel sind beispielhaft jeweils nur ein erster und ein zweiter Energiespeicher gezeigt. Es sind jedoch auch modular aufgebaute Energiespeichereinrichtungen denkbar, welche jeweils aus mehreren gleichartigen oder verschiedenen Energiespeichern bestehen.

Jeder Energiespeicher wird von der Energieversorgungseinheit 3 mit Energie versorgt. Er kann diese Energie speichern und einem entsprechenden Verbraucher zur Verfügung stellen. Wesentlicher Erfindungsgedanke ist dabei, dass jeder Energiespeicher jeweils auf die Erfordernisse des entsprechenden Verbrauchers ausgelegt und optimiert ist. Der jeweilige Energiespeicher soll daher nur an seinen bestimmten Verbraucher Energie abgeben können. Dazu ist sichergestellt, dass ein Leistungsfluss von einem Energiespeicher zum anderen nicht stattfinden kann. Es soll also kein Umladen erfolgen.

In vorliegendem Ausführungsbeispiel wird ein Leistungsfluss vom Doppelschichtkondensator 7 zum Batteriespeicher 6 durch die Diode 8 verhindert, welche sich zwischen dem Doppelschichtkondensator 7 und dem Anschluss der Wandlervorrichtung 5 befindet. Ein Leistungsfluss vom Batteriespeicher 6 zum Doppelschichtkondensator 7 wird durch die Wandlervorrichtung 5 verhindert. Zu diesem Zweck ist die Wandlervorrichtung 5 als unidirektionaler DC/DC-Wandler ausgeführt. Die Unidirektionalität wird dabei schematisch durch eine Diode 9 dargestellt, welche in diesem Beispiel einem nicht potentialgetrennten DC/DC-Wandler 10 folgt. Diese Anordnung soll lediglich die Funktionalität der Wandlervorrichtung als unidirektionalen DC/DC-Wandler veranschaulichen, wobei ein Leistungsfluss nur in Richtung des Batteriespeichers 6 möglich ist.

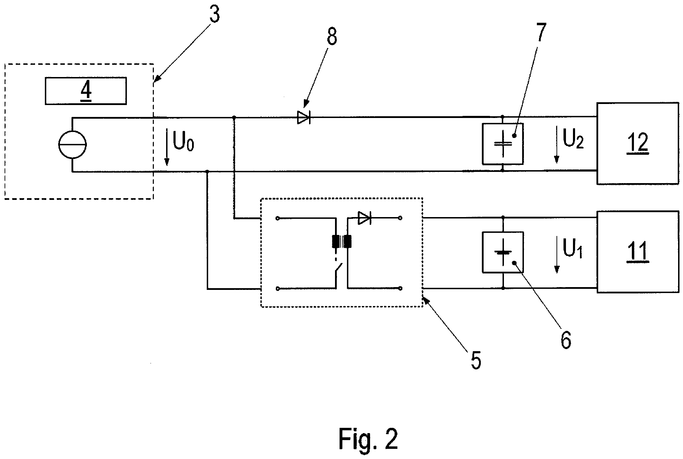

Figur 2 zeigt eine Anwendung der Vorrichtung zur Spannungsversorgung zweier Verbraucher in einem MAS. Das MAS ist hier nicht weiter gezeigt. Die Wandlervorrichtung 5 ist in diesem Beispiel als Sperrwandler ausgeführt. Dieser ist ein Beispiel für einen potentialgetrennten, unidirektionalen DC/DC-Wandler. Somit wird ein Leistungsfluss vom Batteriespeicher 6 zum Doppelschichtkondensator 7 verhindert. Ein Umladen vom Doppelschichtkondensator 7 zum Batteriespeicher 6 wird durch die Diode 8 verhindert.

Der erste Verbraucher 11 ist in diesem Ausführungsbeispiel als Fahrzeugsteuerung ausgebildet. Diese steuert unter anderem die Fahrbewegung des MAS. Die Steuerung wird dabei mit der ersten Gleichspannung U₁ versorgt, welche typischerweise 12V, 24V oder 48V beträgt. Auch andere Verbraucher, welche allgemein als Fahrzeugelektronik bezeichenbar sind, sind mit dieser Gleichspannung U₁ versorgbar, beispielsweise Sicherheitssensoren wie Laserscanner und entsprechende Auswertungselektroniken.

Für die Fahrbewegung verfügt das MAS über eine Antriebseinrichtung 12, welche beispielsweise als 3-Phasen-Drehstrommotor mit vorgeschaltetem 3-Phasen-Wechselrichter ausführbar ist. Der Wechselrichter wandelt dabei in bekannter Weise die zweite Gleichspannung U₂ in eine 3-Phasen-Wechselspannung um, mit welcher der Drehstrommotor, beispielsweise ein Käfigläufer, betrieben wird. Die Antriebseinrichtung 12 kann dabei auch mehrere Motoren aufweisen, welche jeweils von einem eigenen Wechselrichter betreibbar sind. Darüber hinaus ist der Wechselrichter auch rückspeisefähig ausführbar, so dass bei generatorischem Betrieb der Antriebsmotoren ein Aufladen des Doppelschichtkondensators 7 möglich ist. Neben Antriebseinrichtungen zur Traktion des MAS sind auch andere Verbraucher für die zweite Gleichspannung U₂ denkbar, wie beispielsweise Hubeinrichtungen zur Aufnahme einer Last oder Handlingseinrichtungen zur Bewegung eines Objektes, beispielsweise ein Roboterarm. Diese Verbraucher 5 werden mit der zweiten Gleichspannung U₂ im Bereich von 120V bis 600V versorgt.

Die Energieversorgungseinheit 3 für das Fahrzeug kann unterschiedlich ausgeführt sein. Beispielsweise ist ein einfaches Ladegerät mit Steckkontakt ausführbar, so dass das MAS an bestimmten Ladestationen kontaktbehaftet mit Energie versorgbar ist. Ebenso ist eine kontaktbehaftete Energieversorgung während der Fahrt des MAS beispielsweise mittels Schleifleitungen ausführbar. Alternativ dazu ist eine berührungslose Energieversorgung ausführbar, beispielsweise eine induktive Energieversorgung. Diese kann dabei durch gekoppelte Primär- und Sekundärinduktivitäten stattfinden. Auch hier ist sowohl eine Versorgung an stationären Ladestationen als auch eine Versorgung während der Fahrt des MAS denkbar, beispielsweise durch im oder auf dem Hallenboden verlegte Primärleiter. Wenn eine externe Energieversorgung vorhanden ist, wird durch die Energieversorgungseinheit 3 die Ausgangsgleichspannung U₀ bereitgestellt. Wenn keine externe Energieversorgung vorhanden ist, beispielsweise, weil das MAS auf einer Teilstrecke ohne Schleifleitungen oder induktiver Versorgung fährt, beträgt die Ausgangsgleichspannung U₀ folglich Null.

Die Energiespeicher sind vor allem dazu ausgelegt, das MAS während Betriebsphasen mit Energie zu versorgen, in denen das MAS über keine wie vorher beschriebene externe Energieversorgung verfügt. Das können Fahrten zwischen stationären Ladestationen oder Fahrten abseits der Primärleiter oder Schleifleitungen sein.

Dadurch, dass kein Umladen zwischen den beiden Energiespeichern möglich ist, können die Energiespeicher jeweils für ihre spezielle Aufgabe ausgelegt und optimiert. Der Batteriespeicher versorgt die Fahrzeugelektronik, deren Verbrauch im Voraus ermittelt werden kann. Der Verbrauch hängt dabei näherungsweise von der Betriebsdauer ohne externe Energieversorgung ab und benötigt erfahrungsgemäß große Sicherheitszuschläge für unvorhergesehene Störungen, die zu Wartezeiten führen. Der Doppelschichtkondensator versorgt die Antriebe des MAS und deren Verbrauch hängt näherungsweise von der Fahrstrecke ohne externe Energieversorgung ab, die vorab gut zu planen ist, da die räumliche Anordnung der Ladeinfrastruktur bekannt ist.

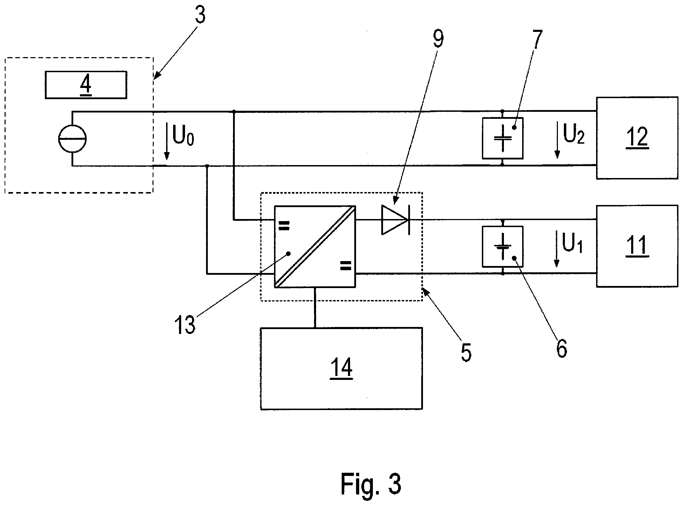

Figur 3 zeigt ein weiteres Ausführungsbeispiel eines MAS mit zwei Verbrauchern. Gleiche Bezugszeichen bezeichnen gleiche Bauteile und es wird für diese auf die vorstehenden Ausführungen verwiesen. Die Wandlervorrichtung 5 umfasst in diesem Beispiel einen potentialgetrennten DC/DC-Wandler 13. Die Diode 9 soll wieder symbolisieren, dass es sich bei der Wandlervorrichtung 5 um einen unidirektionalen DC/DC-Wandler handelt. Durch diesen unidirektionalen DC/DC-Wandler wird ein Leistungsfluss vom Batteriespeicher 6 zum Doppelschichtkondensator 7 verhindert.

Im Unterschied zum Ausführungsbeispiel der Figur 2 befindet sich bei diesem Ausführungsbeispiel keine Diode zwischen dem Doppelschichtkondensator 7 und der Wandlervorrichtung 5, weshalb zu jedem Zeitpunkt die Spannung am Doppelschichtkondensator, also die zweite Gleichspannung U₂, der Ausgangsgleichspannung U₀ entspricht. Es wird daher für das Ausführungsbeispiel ohne Diode von einer Spannungsebene U₂ gesprochen und damit ist der Spannungswert derjenigen Spannung gemeint, welche bei dem Ausführungsbeispiel ohne Diode am Doppelschichtkondensator und folglich auch am Ausgang der Energieversorgungseinheit 3 anliegt. Bei fehlender externer Energieversorgung der Energieversorgungseinheit 3 ist also in diesem Ausführungsbeispiel der Wert der Ausgangsgleichspannung U₀ dennoch größer als Null, wenn der Doppelschichtkondensator noch über Ladung verfügt. Es ist sogar möglich, dass U₀ bzw. U₂ ansteigen, obwohl keine externe Energieversorgung vorhanden ist, beispielsweise, wenn über die Antriebseinrichtung 12 generatorisch Energie eingespeist wird. Dies ist ein Unterschied zu den Ausführungsbeispielen der Figuren 1 und 2, bei denen die Spannungswerte U₀ und U₂ aufgrund der Diode 8 verschieden sein können, die Spannungsebenen U₀ und U₂ können sich also im zeitlichen Verlauf für diese Ausführungsbeispiele unterscheiden.

Im Ausführungsbeispiel der Figur 3 ist der Doppelschichtkondensator 7 direkt mit der Wandlervorrichtung 5 verbunden. Er ist auch direkt mit der Energieversorgungseinheit 3 verbunden. Direkt verbunden bedeutet hier, dass keine Bauteile dazwischen angeordnet sind, welche einen Leistungsfluss beeinflussen, also steuern oder verhindern, können. Um im vorliegenden Ausführungsbeispiel daher ein Umladen vom Doppelschichtkondensator 7 zum Batteriespeicher 6, insbesondere permanent, also zu jedem Zeitpunkt, zu verhindern, wird eine Wandlersteuerung 14 eingesetzt, welche den Spannungswert der Spannungsebene U₂ mittels einer Gradienten-Auswertung überwacht. Es wird also die zweite Gleichspannung U₂ gemessen und deren zeitliche Entwicklung überwacht. Mittels der Gradienten-Auswertung überprüft die Wandlersteuerung 14, ob zweite Gleichspannung U₂ ansteigt (positiver Gradient). Es wird also überprüft, ob in den Doppelschichtkondensator 7 Energie eingespeist wird. Diese Energieeinspeisung kann von der Energieversorgungseinheit 3 oder von einem temporär energieerzeugenden Verbraucher, beispielsweise einem generatorisch betriebenen Elektromotor, stammen. Durch die genannte Gradientenauswertung ist vorteilhaft eine Diode zwischen Doppelschichtkondensator 7 und Wandlervorrichtung 5, wie im Ausführungsbeispiel nach Figur 1, verzichtbar, also eine direkte Verbindung der beiden Komponenten realisierbar. Diese direkte Verbindung ist jedoch nicht zwingend notwendig. Es könnte also alternativ auch eine solche Diode dazwischen angeordnet sein.

Sofern mehr Energie in die Spannungsebene U₂ eingespeist wird als dieser entnommen wird (positiver Gradient auf Spannungsebene U₂), schaltet die Wandlersteuerung 14, insbesondere ab einem durch einen Minimalspannungswert U_{2,min} vordefinierten Ladeniveau des Doppelschichtkondensators 7, die Wandlervorrichtung 5 zum Laden des Batteriespeichers 6 zu. Diese Zuschaltung ist auch als "Aktivierung" bezeichenbar. Der Minimalspannungswert U_{2,min} liegt bevorzugt nahe unterhalb dem üblichen Zielspannungswert der zweiten Gleichspannung U₂, insbesondere im Bereich von 80 - 95% des Zielspannungswertes. Wenn beispielsweise im Normalbetrieb eine zweite Gleichspannung U₂ = 300 V als Zielspannung angestrebt wird, ist beispielsweise ein Minimalspannungswert von 280 V wählbar. Dadurch wird sichergestellt, dass bei einem positiven Gradienten zunächst der Doppelschichtkondensator 7 aufgeladen wird bevor auch parallel dazu der Batteriespeicher aufgeladen wird.

Wird von der Energieversorgungseinheit 3 weniger Energie in die Spannungsebene U₂ eingespeist als durch die Antriebseinrichtung 12 entnommen wird (kein positiver Gradient auf Spannungsebene U₂), so wird die Wandlervorrichtung 5 durch die Wandlersteuerung 14 abgeschaltet. Diese Abschaltung ist auch als "Deaktivierung" bezeichenbar. Dieser Abschaltvorgang verhindert ein Umladen vom Doppelschichtkondensator 7 zum Batteriespeicher 6.

Vorteilhafterweise verfügt das MAS über Sicherheitsmaßnahmen zum Schutz der Energiespeicher. Hierzu werden beispielsweise Ladestrom, Spannung und/oder Temperatur der Energiespeicher gemessen und in einer geeigneten Auswerteeinrichtung ausgewertet. Bei Erreichen bestimmter kritischer Strom-, Spannungs- oder Temperaturwerte werden die Energiespeicher automatisch deaktiviert, um sie vor Zerstörung zu schützen.

### Bezugszeichenliste

- 1: Erster Gleichspannungsanschluss
- 2: Zweiter Gleichspannungsanschluss
- 3: Energieversorgungseinheit
- 4: Regler
- 5: Wandlervorrichtung
- 6: Erste Energiespeichereinrichtung
- 7: Zweite Energiespeichereinrichtung
- 8: Diode
- 9: Diode
- 10: DC/DC-Wandler
- 11: Erster Verbraucher
- 12: Zweiter Verbraucher
- 13: Potentialgetrennter DC/DC-Wandler
- 14: Wandlersteuerung
- U₀: Ausgangsgleichspannung
- U₁: Erste Gleichspannung
- U₂: Zweite Gleichspannung

## Patentansprüche

1. Verfahren zum Betreiben eines elektrischen Fahrzeuges aufweisend
- eine elektrische Fahrantriebseinrichtung (12) für die Fahrbewegung, insbesondere Traktion, des Fahrzeugs,
- eine Steuereinrichtung (11) zur Steuerung der Fahrbewegung des Fahrzeugs,
- eine erste Energiespeichereinrichtung (6) zur Versorgung der Steuereinrichtung (11) mit einer ersten Gleichspannung (U₁),
- eine zweite Energiespeichereinrichtung (7), welche insbesondere schneller auf- und entladbar ist als die erste Energiespeichereinrichtung (6), zur Versorgung der Fahrantriebseinrichtung (12) mit einer zweiten Gleichspannung (U₂), welche insbesondere größer als die erste Gleichspannung (U₁) ist, und
- eine Energieversorgungseinheit (3), welche, insbesondere zeitabschnittsweise, eine Ausgangsgleichspannung (U₀) bereitstellt,
wobei die erste Energiespeichereinrichtung (6) über eine Wandlervorrichtung (5) mit der Energieversorgungseinheit verbunden ist,
wobei die zweite Energiespeichereinrichtung (7) mit der Energieversorgungseinheit (3) verbunden ist,
wobei die Wandlervorrichtung (5) die Ausgangsgleichspannung (U₀) in die erste Gleichspannung (U₁) umwandelt, insbesondere wobei die erste Gleichspannung (U₁) kleiner als die Ausgangsgleichspannung (U₀) ist,
**dadurch gekennzeichnet, dass**
ein erster Leistungsfluss von der ersten Energiespeichereinrichtung (6) zur zweiten Energiespeichereinrichtung (7) verhindert wird und
dass ein zweiter Leistungsfluss von der zweiten Energiespeichereinrichtung (7) zur ersten Energiespeichereinrichtung (6) verhindert wird.

2. Verfahren nach Anspruch 1,
**dadurch gekennzeichnet, dass**
das elektrische Fahrzeug als fahrerloses, mobiles Assistenzsystem, die erste Energiespeichereinrichtung (6) als wieder aufladbare Batteriespeichereinrichtung und die zweite Energiespeichereinrichtung (7) als Doppelschichtkondensatoreinrichtung ausgebildet ist, wobei der erste Leistungsfluss jederzeit, also zu jedem Zeitpunkt, verhindert wird und
wobei der zweite Leistungsfluss jederzeit, also zu jedem Zeitpunkt, verhindert wird.

3. Verfahren nach einem der vorangegangenen Ansprüche,
**dadurch gekennzeichnet, dass**
ein Ausgangsstrom der Energieversorgungseinheit (3) einen zeitlich im Wesentlichen konstanten Wert (I₀) aufweist, insbesondere wobei der Ausgangsstrom auf diesen konstanten Wert (I₀) geregelt wird.

4. Verfahren nach einem der vorangegangenen Ansprüche,
**dadurch gekennzeichnet, dass**
der Energieversorgungseinheit (3) kontaktbehaftet oder berührungslos Energie zugeführt wird und/oder
dass der Energieversorgungseinheit (3) zeitabschnittsweise während der Fahrt Energie zugeführt wird.

5. Verfahren nach einem der vorangegangenen Ansprüche,
**dadurch gekennzeichnet, dass**
der erste Leistungsfluss dadurch verhindert wird, dass die Wandlervorrichtung (5) als unidirektionaler, insbesondere potentialgetrennter, DC/DC-Wandler ausgebildet ist.

6. Verfahren nach einem der vorangegangenen Ansprüche,
**dadurch gekennzeichnet, dass**
der zweite Leistungsfluss durch eine zwischen der zweiten Energiespeichereinrichtung (7) und der Wandlervorrichtung (5) angeordnete Diode (8) verhindert wird.

7. Verfahren nach einem der Ansprüche 1 bis 5,
**dadurch gekennzeichnet, dass**
die zweite Energiespeichereinrichtung (7) direkt mit der Energieversorgungseinheit (3) und/oder direkt mit der Wandlervorrichtung (5) verbunden ist,
und dass der zweite Leistungsfluss dadurch verhindert wird, dass die zweite Gleichspannung (U₂) mittels einer Gradienten-Auswertung überwacht wird, wobei bei einem positiven Gradienten auf Spannungsebene der zweiten Gleichspannung (U₂) die Wandlervorrichtung (5) aktiviert wird, insbesondere wenn die zweite Gleichspannung (U₂) größer als ein Minimalspannungswert (U_{2,min}) ist, und bei einem nicht positiven Gradienten auf Spannungsebene der zweiten Gleichspannung (U₂) die Wandlervorrichtung (5) deaktiviert wird.

8. Verfahren nach einem der vorangegangenen Ansprüche,
**dadurch gekennzeichnet, dass**
die erste Gleichspannung (U₁) zum Laden der ersten Energiespeichereinrichtung (6), insbesondere mittels der Steuereinrichtung (11), variiert wird.

9. Verfahren nach einem der vorangegangenen Ansprüche,
**dadurch gekennzeichnet, dass**
die zweite Energiespeichereinrichtung (7) derart ausgelegt ist, dass mehr Strom aufnehmbar ist als durch die Energieversorgungseinheit (3) bereitstellbar ist.

10. Vorrichtung zur Versorgung eines ersten Verbrauchers (11) eines elektrischen Fahrzeuges, insbesondere eines fahrerlosen, mobilen Assistenzsystems einer intralogistischen Anwendung, mit einer ersten Gleichspannung (U₁) und zur Versorgung eines zweiten Verbrauchers (12) mit einer zweiten Gleichspannung (U₂) aufweisend:
- eine erste Energiespeichereinrichtung (6), welche insbesondere als wieder aufladbare Batteriespeichereinrichtung ausgebildet ist,
- eine zweite Energiespeichereinrichtung (7), welche insbesondere als Doppelschichtkondensatoreinrichtung ausgebildet ist und/oder welche insbesondere schneller auf- und entladbar ist als die erste Energiespeichereinrichtung (6), und
- eine Energieversorgungseinheit (3), welcher, insbesondere zeitabschnittsweise, eine Ausgangsgleichspannung (U₀) entnehmbar ist,
wobei der ersten Energiespeichereinrichtung (6) die erste Gleichspannung (U₁) entnehmbar ist, wobei der zweiten Energiespeichereinrichtung (7) die zweite Gleichspannung (U₂) entnehmbar ist, welche insbesondere größer als die erste Gleichspannung (U₁) ist,
wobei die erste Energiespeichereinrichtung (6) über eine Wandlervorrichtung (5) mit der Energieversorgungseinheit verbunden ist,
wobei die zweite Energiespeichereinrichtung (7) mit der Energieversorgungseinheit (3) verbunden ist,
wobei die Wandlervorrichtung (5) die Ausgangsgleichspannung (U₀) in die erste Gleichspannung (U₁) umwandelt, insbesondere wobei die erste Gleichspannung (U₁) kleiner als die Ausgangsgleichspannung (U₀) ist,
**dadurch gekennzeichnet, dass**
die Vorrichtung derart ausgestaltet ist, dass ein erster Leistungsfluss von der ersten Energiespeichereinrichtung (6) zur zweiten Energiespeichereinrichtung (7), insbesondere jederzeit, verhindert wird und
dass ein zweiter Leistungsfluss von der zweiten Energiespeichereinrichtung (7) zur ersten Energiespeichereinrichtung (6), insbesondere jederzeit, verhindert wird.

11. Vorrichtung nach Anspruch 10,
**dadurch gekennzeichnet, dass**
die Energieversorgungseinheit (3) als regelbare Stromquelle ausgebildet ist.

12. Vorrichtung nach einem der Ansprüche 10 oder 11,
**dadurch gekennzeichnet, dass**
die erste Energiespeichereinrichtung (6) derart trennbar am elektrischen Fahrzeug angeordnet ist, dass ein Austausch der ersten Energiespeichereinrichtung (6) ermöglicht ist.

13. Vorrichtung nach einem der Ansprüche 10 bis 12,
**dadurch gekennzeichnet, dass**
an der ersten Energiespeichereinrichtung (6) mittels einer Strommessung und/oder Spannungsmessung ein Überspannungsschutz und/oder Unterspannungsschutz und/oder Überstromschutz bereitgestellt ist und/oder dass
an der ersten Energiespeichereinrichtung (6) mittels einer Temperaturmessung ein Übertemperaturschutz bereitgestellt ist und/oder dass
an der zweiten Energiespeichereinrichtung (7) mittels einer Strommessung und/oder Spannungsmessung ein Überspannungsschutz und/oder Überstromschutz bereitgestellt ist und /oder dass
an der zweiten Energiespeichereinrichtung (7) mittels einer Temperaturmessung ein Übertemperaturschutz bereitgestellt ist.

14. Elektrisches Fahrzeug, insbesondere fahrerloses, mobiles Assistenzsystem einer intralogistischen Anwendung, insbesondere zur Durchführung eines Verfahrens nach einem der Ansprüche 1 bis 9, aufweisend eine Vorrichtung nach einem der Ansprüche 10 bis 13, einen ersten Verbraucher (11) und einen zweiten Verbraucher (12).

15. Elektrisches Fahrzeug nach Anspruch 14,
**dadurch gekennzeichnet, dass**
der erste Verbraucher (11) eine Steuereinrichtung zur Steuerung der Fahrbewegung des Fahrzeugs ist und/oder dass der zweite Verbraucher (12) eine elektrische Fahrantriebseinrichtung für die Fahrbewegung, insbesondere Traktion, des Fahrzeugs oder eine Hubeinrichtung oder eine Handlingseinrichtung ist.

## Claims

1. Method for operating an electric vehicle comprising
- an electric travel drive device (12) for the travel motion, in particular traction, of the vehicle,
- a control device (11) for controlling the travel motion of the vehicle,
- a first energy storage device (6) for supplying the control device (11) with a first DC voltage (U₁),
- a second energy storage device (7), which in particular can be charged and discharged more rapidly than the first energy storage device (6), for supplying the travel drive device (12) with a second DC voltage (U₂), which in particular is greater than the first DC voltage (U₁), and
- an energy supply unit (3), which, in particular periodically, provides an output DC voltage (U₀),
wherein the first energy storage device (6) is connected to the energy supply unit via a converter device (5),
wherein the second energy storage device (7) is connected to the energy supply unit (3),
wherein the converter device (5) converts the output DC voltage (U₀) into the first DC voltage (U₁), in particular wherein the first DC voltage (U₁) is lower than the output DC voltage (U₀), **characterized in that**
a first power flow from the first energy storage device (6) to the second energy storage device (7) is prevented, and
**in that** a second power flow from the second energy storage device (7) to the first energy storage device (6) is prevented.

2. Method according to claim 1,
**characterized in that**
the electric vehicle is configured as a driverless mobile assistance system, the first energy storage device (6) is configured as a rechargeable battery storage device, and the second energy storage device (7) is configured as a double-layer capacitor device,
wherein the first power flow is prevented at all times, i.e. at every point in time, and
wherein the second power flow is prevented at all times, i.e. at every point in time.

3. Method according to any of the preceding claims,
**characterized in that**
an output current of the energy supply unit (3) has a value (I₀) that is substantially constant over time, in particular wherein the output current is regulated to this constant value (I₀).

4. Method according to any of the preceding claims,
**characterized in that**
energy is supplied to the energy supply unit (3) in a contact-based or contactless manner, and/or
**in that** energy is supplied to the energy supply unit (3) periodically during travel.

5. Method according to any of the preceding claims,
**characterized in that**
the first power flow is prevented by configuring the converter device (5) as a unidirectional, in particular isolated, DC/DC converter.

6. Method according to any of the preceding claims,
**characterized in that**
the second power flow is prevented by a diode (8) arranged between the second energy storage device (7) and the converter device (5).

7. Method according to any of claims 1 to 5,
**characterized in that**
the second energy storage device (7) is connected directly to the energy supply unit (3) and/or directly to the converter device (5),
and **in that** the second power flow is prevented by monitoring the second DC voltage (U₂) by means of a gradient evaluation, the converter device (5) being activated when the voltage level of the second DC voltage (U₂) has a positive gradient, in particular when the second DC voltage (U₂) is greater than a minimum voltage value (U_{2,min}), and the converter device (5) being deactivated when the voltage level of the second DC voltage (U₂) has a non-positive gradient.

8. Method according to any of the preceding claims,
**characterized in that**
the first DC voltage (U₁) for charging the first energy storage device (6) is varied, in particular by means of the control device (11).

9. Method according to any of the preceding claims,
**characterized in that**
the second energy storage device (7) is configured such that more current can be taken up than can be provided by the energy supply unit (3).

10. Device for supplying a first consumer (11) of an electric vehicle, in particular of a driverless mobile assistance system of an intralogistics application, with a first DC voltage (U₁) and for supplying a second consumer (12) with a second DC voltage (U₂), comprising:
- a first energy storage device (6), which in particular is configured as a rechargeable battery storage device,
- a second energy storage device (7), which in particular is configured as a double-layer capacitor device and/or which in particular can be charged and discharged more rapidly than the first energy storage device (6), and
- an energy supply unit (3), from which an output DC voltage (U₀) can be drawn, in particular periodically,
wherein the first DC voltage (U₁) can be drawn from the first energy storage device (6),
wherein the second DC voltage (U₂), which in particular is greater than the first DC voltage (U₁), can be drawn from the second energy storage device (7),
wherein the first energy storage device (7) is connected to the energy supply unit via a converter device (5),
wherein the second energy storage device (7) is connected to the energy supply unit (3),
wherein the converter device (5) converts the output DC voltage (U₀) into the first DC voltage (U₁), in particular wherein the first DC voltage (U₁) is lower than the output DC voltage (U₀), **characterized in that**
the device is configured such that a first power flow from the first energy storage device (6) to the second energy storage device (7) is prevented, in particular at all times, and
such that a second power flow from the second energy storage device (7) to the first energy storage device (6) is prevented, in particular at all times.

11. Device according to claim 10,
**characterized in that**
the energy supply unit (3) is configured as a controllable current source.

12. Device according to any of claims 10 or 11,
**characterized in that**
the first energy storage device (6) is detachably arranged on the electric vehicle such that replacement of the first energy storage device (6) is possible.

13. Device according to any of claims 10 to 12,
**characterized in that**
an overvoltage protection and/or an undervoltage protection and/or an overcurrent protection is provided on the first energy storage device (6) by means of a current measurement and/or voltage measurement, and/or **in that**
an overtemperature protection is provided on the first energy storage device (6) by means of a temperature measurement, and/or in that
an overvoltage protection and/or an overcurrent protection is provided on the second energy storage device (7) by means of a current measurement and/or voltage measurement, and/or **in that** an overtemperature protection is provided on the second energy storage device (7) by means of a temperature measurement.

14. Electric vehicle, in particular a driverless mobile assistance system of an intralogistics application, in particular for carrying out a method according to any of claims 1 to 9, comprising a device according to any of claims 10 to 13, a first consumer (11), and a second consumer (12).

15. Electric vehicle according to claim 14,
**characterized in that**
the first consumer (11) is a control device for controlling the travel motion of the vehicle, and/or **in that** the second consumer (12) is an electric travel drive device for the travel motion, in particular traction, of the vehicle, or is a lifting device or a handling device.

## Revendications

1. Procédé pour exploiter un véhicule électrique comprenant
- un dispositif d'entraînement de déplacement électrique (12) pour le mouvement de déplacement, en particulier la traction, du véhicule,
- un dispositif de commande (11) pour la commande du mouvement de déplacement du véhicule,
- un premier dispositif de stockage d'énergie (6) pour alimenter le dispositif de commande (11) avec une première tension continue (U₁),
- un second dispositif de stockage d'énergie (7), qui est en particulier plus rapide à charger et à décharger que le premier dispositif de stockage d'énergie (6), pour alimenter le dispositif d'entraînement de déplacement (12) avec une seconde tension continue (U₂), qui est en particulier supérieure à la première tension continue (U₁), et -
une unité d'alimentation en énergie (3), qui, en particulier par intervalles de temps, fournit une tension continue de sortie (U₀),
où le premier dispositif de stockage d'énergie (6) est connecté à l'unité d'alimentation en énergie via un dispositif de conversion (5),
où le second dispositif de stockage d'énergie (7) est connecté à l'unité d'alimentation en énergie (3),
où le dispositif de conversion (5) convertit la tension continue de sortie (U₀) en la première tension continue (U₁), en particulier où la première tension continue (U₁) est inférieure à la tension continue de sortie (U₀),
**caractérisé en ce**
**qu'**un premier flux de puissance du premier dispositif de stockage d'énergie (6) vers le second dispositif de stockage d'énergie (7) est empêché et
**qu'**un second flux de puissance du second dispositif de stockage d'énergie (7) vers le premier dispositif de stockage d'énergie (6) est empêché.

2. Procédé selon la revendication 1, **caractérisé en ce que** le véhicule électrique est conçu comme un système d'assistance mobile sans conducteur, le premier dispositif de stockage d'énergie (6) comme dispositif de stockage par batterie rechargeable et le second dispositif de stockage d'énergie (7) comme dispositif de condensateur à double couche,
où le premier flux de puissance est empêché à tout moment, c'est-à-dire à chaque instant, et
où le second flux de puissance est empêché à tout moment, c'est-à-dire à chaque instant.

3. Procédé selon l'une des revendications précédentes, **caractérisé en ce qu'**un courant de sortie de l'unité d'alimentation en énergie (3) présente une valeur essentiellement constante dans le temps (I₀), en particulier où le courant de sortie est régulé à cette valeur constante (I₀). 15-

4. Procédé selon l'une des revendications précédentes, **caractérisé en ce que** l'unité d'alimentation en énergie (3) est alimentée en énergie à contact ou sans contact et/ou
**en ce que** l'unité d'alimentation en énergie (3) est alimentée en énergie par intervalles de temps pendant le déplacement.

5. Procédé selon l'une des revendications précédentes, **caractérisé en ce que** le premier flux de puissance est empêché **en ce que** le dispositif de conversion (5) est conçu comme un convertisseur CC/CC unidirectionnel, en particulier à séparation galvanique.

6. Procédé selon l'une des revendications précédentes, **caractérisé en ce que** le second flux de puissance est empêché par une diode (8) disposée entre le second dispositif de stockage d'énergie (7) et le dispositif de conversion (5).

7. Procédé selon l'une des revendications 1 à 5,
**caractérisé en ce que**
le second dispositif de stockage d'énergie (7) est connecté directement à l'unité d'alimentation en énergie (3) et/ou directement au dispositif de conversion (5),
et que le second flux de puissance est empêché **en ce que** la seconde tension continue (U₂) est surveillée au moyen d'une évaluation de gradient, où, en cas de gradient positif au niveau de la tension de la seconde tension continue (U₂), le dispositif de conversion (5) est activé, en particulier lorsque la seconde tension continue (U₂) est supérieure à une valeur minimale de tension (U₂,min), et en cas de gradient non positif au niveau de la tension de la seconde tension continue (U₂), le dispositif de conversion (5) est désactivé.

8. Procédé selon l'une des revendications précédentes, **caractérisé en ce que** la première tension continue (U₁) pour charger le premier dispositif de stockage d'énergie (6), en particulier au moyen du dispositif de commande (11), est variée.

9. Procédé selon l'une des revendications précédentes, **caractérisé en ce que** le second dispositif de stockage d'énergie (7) est dimensionné de sorte que plus de courant peut être absorbé que ce qui peut être fourni par l'unité d'alimentation en énergie (3).

10. Dispositif pour alimenter un premier consommateur (11) d'un véhicule électrique, en particulier d'un système d'assistance mobile sans conducteur d'une application intralogistique, avec une première tension continue (U₁) et pour alimenter un second consommateur (12) avec une seconde tension continue (U₂) comprenant :
- un premier dispositif de stockage d'énergie (6), qui est en particulier conçu comme dispositif de stockage par batterie rechargeable,
- un second dispositif de stockage d'énergie (7), qui est en particulier conçu comme dispositif de condensateur à double couche et/ou qui est en particulier plus rapide à charger et à décharger que le premier dispositif de stockage d'énergie (6), et
- une unité d'alimentation en énergie (3), à laquelle, en particulier par intervalles de temps, une tension continue de sortie (U₀) peut être prélevée,
où la première tension continue (U₁) peut être prélevée du premier dispositif de stockage d'énergie (6),
où la seconde tension continue (U₂) peut être prélevée du second dispositif de stockage d'énergie (7), qui est en particulier supérieure à la première tension continue (U₁),
où le premier dispositif de stockage d'énergie (6) est connecté à l'unité d'alimentation en énergie via un dispositif de conversion (5),
où le second dispositif de stockage d'énergie (7) est connecté à l'unité d'alimentation en énergie (3),
où le dispositif de conversion (5) convertit la tension continue de sortie (U₀) en la première tension continue (U₁), en particulier où la première tension continue (U₁) est inférieure à la tension continue de sortie (U₀),
**caractérisé en ce que**
le dispositif est conçu de sorte qu'un premier flux de puissance du premier dispositif de stockage d'énergie (6) vers le second dispositif de stockage d'énergie (7), en particulier à tout moment, est empêché et
qu'un second flux de puissance du second dispositif de stockage d'énergie (7) vers le premier dispositif de stockage d'énergie (6), en particulier à tout moment, est empêché.

11. Dispositif selon la revendication 10, **caractérisé en ce que** l'unité d'alimentation en énergie (3) est conçue comme source de courant réglable.

12. Dispositif selon l'une des revendications 10 ou 11, **caractérisé en ce que** le premier dispositif de stockage d'énergie (6) est disposé de manière séparable sur le véhicule électrique de sorte qu'un échange du premier dispositif de stockage d'énergie (6) est possible.

13. Dispositif selon l'une des revendications 10 à 12,
**caractérisé en ce que**
sur le premier dispositif de stockage d'énergie (6), au moyen d'une mesure de courant et/ou mesure de tension, une protection contre les surtensions et/ou protection contre les sous-tensions et/ou protection contre les surintensités est fournie et/ou
que sur le premier dispositif de stockage d'énergie (6), au moyen d'une mesure de température, une protection contre les surchauffes est fournie et/ou
que sur le second dispositif de stockage d'énergie (7), au moyen d'une mesure de courant et/ou mesure de tension, une protection contre les surtensions et/ou protection contre les surintensités est fournie et/ou
que sur le second dispositif de stockage d'énergie (7), au moyen d'une mesure de température, une protection contre les surchauffes est fournie.

14. Véhicule électrique, en particulier système d'assistance mobile sans conducteur d'une application intralogistique, en particulier pour la mise en œuvre d'un procédé selon l'une des revendications 1 à 9, comprenant un dispositif selon l'une des revendications 10 à 13, un premier consommateur (11) et un second consommateur (12).

15. Véhicule électrique selon la revendication 14, **caractérisé en ce que** le premier consommateur (11) est un dispositif de commande pour la commande du mouvement de déplacement du véhicule et/ou que le second consommateur (12) est un dispositif d'entraînement de déplacement électrique pour le mouvement de déplacement, en particulier la traction, du véhicule ou un dispositif de levage ou un dispositif de manutention.
